# EUROPEAN PATENT APPLICATION

(11) **EP 4 686 655 A1**
(43) Date of publication of application: **04.02.2026**
(21) Application number: 25182004.9
(22) Date of filing: 11.06.2025
(51) Int. Cl.: B64D 37/28, F16K 37/00, F16K 5/06

(54) **VALVE STATE DETECTION SYSTEM AND ASSEMBLY FOR AIRCRAFT FUEL SYSTEM AND METHOD**

(30) Priority: 31.07.2024 US 202418790321
(71) Applicant: The Boeing Company, Arlington, VA 22202 (US)
(72) Inventor: Johnson, Timothy Andrew, Arlington, 22202 (US); Paananen, James Michael, Arlington, 22202 (US)
(74) Representative: Witte, Weller & Partner Patentanwälte mbB

(57) **Abstract**

A valve state detection system for directly determining and confirming the existing valve state in an aircraft fuel control valve in real time, with an aircraft fuel control valve incorporating a electromagnetic energy beam transmitter and receiver for emitting and receiving an electromagnetic energy beam across an aircraft fuel control valve assembly chamber.

## Description

### TECHNOLOGICAL FIELD

The present disclosure relates, generally, to the field of valve monitoring systems. More specifically, the present disclosure relates to the field of monitoring aircraft fuel control valve systems.

### BACKGROUND

Optimal aircraft operation can depend upon the proper operating condition of fuel delivery systems and components. The ability to know the state of one or more valves in an aircraft fuel delivery system can be vital to ensure optimal aircraft operation and to comply with regulatory requirements.

Typical methods for determining a component part orientation in an assembly, for example, can rely on indirectly monitoring the state of the component part of interest by measuring a characteristic and/or an operation and/or orientation of a sub-component part in an assembly that is attached to the component part of interest. Malfunction of the sub-component part or disengagement of the observed sub-component part from the actual component of interest may result in a false operational reading of the actual state of the component part of interest.

Unless explicitly identified as such, no statement herein is admitted as prior art merely by of such statement's inclusion in the Technological Field and/or Background section.

### SUMMARY

A present aspect is directed to an aircraft fuel control valve assembly comprising an aircraft fuel control valve housing, with the fuel control valve housing comprising a valve body comprising a valve body interior, a valve inlet, a valve outlet, and a valve chamber, with the valve chamber established by an area within the valve body interior of the aircraft fuel control valve assembly, and with the valve body and the valve chamber further established between the valve inlet and the valve outlet, with the valve body comprising the valve chamber and a movable valve, with the movable valve positioned substantially within valve chamber. The aircraft fuel control valve assembly further comprises a primary electromagnetic energy transmitter integrated into the aircraft fuel control valve assembly, with the primary electromagnetic energy transmitter configured to direct primary electromagnetic energy that can be light (and that can be a primary electromagnetic energy beam that can be a primary electromagnetic energy light beam) from the primary electromagnetic energy transmitter into and across the valve chamber, and with the primary electromagnetic energy transmitter further comprising an electromagnetic energy source. The aircraft fuel control valve assembly further comprises a primary electromagnetic energy receiver integrated into the aircraft fuel control valve assembly, with the primary electromagnetic energy receiver configured to receive the primary electromagnetic energy that can be a transmitted primary electromagnetic energy beam from the primary electromagnetic energy transmitter, and with the primary electromagnetic energy receiver configured to generate a valve condition primary signal.

In another present aspect, the aircraft fuel control valve assembly further comprises a movable valve, with the movable valve configured to comprise an operating range of motion between an open valve configuration and a closed valve configuration.

In another present aspect, the aircraft fuel control valve assembly, further comprises an actuator, with the actuator in communication with the movable valve, and with the actuator configured to move the movable valve between the open valve configuration and the closed valve configuration.

In another present aspect, the aircraft fuel control valve assembly further comprises a secondary electromagnetic energy transmitter integrated into the aircraft fuel control valve assembly, with the secondary electromagnetic energy transmitter configured to direct secondary electromagnetic energy that can be light (and that can be a secondary electromagnetic energy beam that can be a secondary electromagnetic energy light beam) from the secondary electromagnetic energy transmitter into and across the valve chamber, with the secondary electromagnetic energy transmitter further comprising at least one of the primary electromagnetic energy source and a secondary electromagnetic energy source. The aircraft fuel control valve assembly further comprises a secondary electromagnetic energy receiver integrated into the fuel aircraft fuel control valve assembly, with the secondary electromagnetic energy receiver configured to receive at least one of the primary electromagnetic energy beam from the primary electromagnetic energy transmitter and the secondary electromagnetic energy beam from the secondary electromagnetic energy transmitter, and with the secondary electromagnetic energy receiver configured to generate a valve condition secondary signal.

In another present aspect, the primary and secondary electromagnetic energy source is at least one of a laser and a light emitting diode, with the primary and secondary electromagnetic energy source configured to generate light to form generated light, that can be a generated light beam.

In another present aspect, the generated light comprises a wavelength ranging from about 850 nm to about 1550 nm.

In another present aspect, the secondary electromagnetic energy source comprises at least one of a laser and a light emitting diode, with the secondary electromagnetic energy source configured to generate the secondary electromagnetic energy beam to form a generated secondary light beam.

In another present aspect, the generated secondary light beam comprises a wavelength ranging from about 850 nm to about 1550 nm.

In another present aspect, the generated light beam extends from the primary electromagnetic energy transmitter to the primary electromagnetic energy receiver along a substantially straight line, with the substantially straight line extending through the valve chamber from the primary electromagnetic energy transmitter to the primary electromagnetic energy receiver when the movable valve is in the open valve configuration.

In another present aspect, the generated light beam is configured to extend diagonally through (e.g., across) the valve chamber from the primary electromagnetic energy transmitter to the primary electromagnetic energy receiver when the movable valve is in the open valve configuration.

Another present aspect is directed to an aircraft comprising an aircraft fuel control valve assembly comprising an aircraft fuel control valve housing, with the fuel control valve housing comprising a valve body comprising a valve body interior, a valve inlet, a valve outlet, and a valve chamber, with the valve chamber established by an area within the valve body interior of the aircraft fuel control valve assembly, and with the valve body and the valve chamber further established between the valve inlet and the valve outlet, and with the valve body comprising the valve chamber, and a movable valve, with the movable valve positioned substantially within valve chamber. The aircraft fuel valve assembly further comprises a primary electromagnetic energy transmitter integrated into the aircraft fuel control valve assembly, with the primary electromagnetic energy transmitter configured to direct primary electromagnetic energy that can be light (and that can be a primary electromagnetic energy beam that can be a primary electromagnetic energy light beam) from the primary electromagnetic energy transmitter into and across the valve chamber, and with the primary electromagnetic energy transmitter further comprising an electromagnetic energy source. The aircraft fuel valve assembly further comprises a primary electromagnetic energy receiver integrated into the aircraft fuel control valve assembly, with the primary electromagnetic energy receiver configured to receive the primary electromagnetic energy beam from the primary electromagnetic energy transmitter, and with the primary electromagnetic energy receiver configured to generate a valve condition primary signal.

Another present aspect is directed to an aircraft fuel control valve state detection system for determining an aircraft fuel control valve state, with the aircraft fuel control valve state detection system comprising an aircraft fuel control valve assembly positioned within an aircraft fuel line, with the aircraft fuel control valve assembly comprising an aircraft fuel control valve housing, with the fuel control valve housing comprising a valve body comprising a valve body interior, a valve inlet, a valve outlet, and a valve chamber, with the valve chamber established by an area within the valve body interior of the aircraft fuel control valve assembly, with the valve body and the valve chamber further established between the valve inlet and the valve outlet, and with the valve body comprising the valve chamber, and a movable valve, with the movable valve positioned substantially within valve chamber. The aircraft fuel valve assembly further comprises a primary electromagnetic energy transmitter integrated into the aircraft fuel control valve assembly, with the primary electromagnetic energy transmitter configured to direct primary electromagnetic energy that can be light (and that can be a primary electromagnetic energy beam that can be a primary electromagnetic energy light beam) from the primary electromagnetic energy transmitter into and across the valve chamber, and with the primary electromagnetic energy transmitter further comprising an electromagnetic energy source. The aircraft fuel control valve assembly further comprises a primary electromagnetic energy receiver integrated into the aircraft fuel control valve assembly, with the primary electromagnetic energy receiver configured to receive the primary electromagnetic energy beam from the primary electromagnetic energy transmitter, and with the primary electromagnetic energy receiver configured to generate a valve condition primary signal. The aircraft fuel control valve state detection system for determining an aircraft fuel valve state further comprises a processor in communication with the primary electromagnetic energy receiver, with the processor configured to receive the valve condition primary signal, with the processor further configured to interpret the valve condition primary signal generated by the primary electromagnetic energy receiver to form an interpreted fuel valve condition primary signal, and with the interpreted fuel valve condition primary signal corresponding to the aircraft fuel valve state.

In another present aspect, the electromagnetic energy source is at least one of a laser and a light emitting diode configured to generate a light beam, with the beam having a wavelength ranging from about 850 nm to about 1550 nm.

In a further present aspect, the aircraft fuel control valve state detection system further comprises a readout in communication with the processor.

In another present aspect, in the present aircraft fuel control valve state detection system, the aircraft fuel control valve assembly further comprises a valve actuator, with the valve actuator in direct communication with the movable valve, and with the actuator configured to move the movable valve between an open valve configuration and a closed valve configuration.

In another present aspect, in the present aircraft fuel control valve state detection system, the aircraft fuel control valve assembly further comprises secondary electromagnetic energy transmitter integrated into the aircraft fuel control valve assembly, with the secondary electromagnetic energy transmitter configured to direct secondary electromagnetic energy that can be a light (and that can be a primary electromagnetic energy beam that can be a primary electromagnetic energy light beam) from the secondary electromagnetic energy transmitter into and across the valve chamber, with the secondary electromagnetic energy transmitter further comprising an electromagnetic energy source. The aircraft fuel control valve assembly further comprises a secondary electromagnetic energy receiver integrated into the fuel aircraft fuel control valve assembly, with the secondary electromagnetic energy receiver configured to receive at least one of the primary electromagnetic energy beam from the primary electromagnetic energy transmitter and the secondary electromagnetic energy beam from the secondary electromagnetic energy transmitter, and with the secondary electromagnetic energy receiver configured to generate a valve condition secondary signal.

In another present aspect, in the aircraft fuel control valve state detection system, the secondary electromagnetic energy source is configured to generate a light beam, with the generated light beam having a wavelength ranging from about 850 nm to about 1550 nm.

A further present aspect is directed to a method for directly monitoring an aircraft fuel control valve state in an aircraft fuel control valve assembly, with the method comprising positioning an aircraft fuel control valve assembly in an aircraft fuel line, with the aircraft fuel control valve assembly comprising an aircraft fuel control valve housing, with the fuel control valve housing comprising a valve body interior, a valve inlet, a valve outlet, and a valve chamber, with the valve chamber established by an area within the valve body interior of the aircraft fuel control valve assembly, and with the valve body and the valve chamber further established between the valve inlet and the valve outlet, with the valve body comprising the valve chamber in communication with a movable valve, with the movable valve positioned substantially within valve chamber. The aircraft fuel control valve assembly further comprises a primary electromagnetic energy transmitter integrated into the aircraft fuel control valve assembly, with the primary electromagnetic energy transmitter configured to direct a primary electromagnetic energy that can be light (and that can be a primary electromagnetic energy beam that can be a primary electromagnetic energy light beam) from the primary electromagnetic energy transmitter into and across the valve chamber, and with the primary electromagnetic energy transmitter further comprising an electromagnetic energy source. The aircraft fuel control valve assembly further comprises a primary electromagnetic energy receiver integrated into the aircraft fuel control valve assembly, with the primary electromagnetic energy receiver configured to receive the primary electromagnetic energy beam from the primary electromagnetic energy transmitter, and with the primary electromagnetic energy receiver configured to generate a valve condition primary signal. The method further comprises generating an electromagnetic energy beam at the primary electromagnetic energy transmitter, transmitting from the primary electromagnetic energy transmitter and into the valve chamber the primary electromagnetic energy beam to form a transmitted primary electromagnetic energy beam, receiving at the primary electromagnetic energy receiver the primary electromagnetic energy beam transmitted from the primary electromagnetic energy transmitter, and directly monitoring the aircraft fuel control valve state based on at least one of the receipt and the non-receipt of the transmitted primary electromagnetic energy beam by the primary electromagnetic energy receiver.

In another present aspect, the method further comprises, upon the primary electromagnetic energy receiver receiving the transmitted primary electromagnetic energy beam, generating a fuel valve condition primary signal at the primary electromagnetic energy receiver, and interpreting the fuel valve condition primary signal to form an interpreted fuel valve condition primary signal, with the interpreted fuel control valve condition primary signal corresponding to the aircraft fuel valve state, with the aircraft fuel control valve state comprising at least one of an aircraft fuel control valve open configuration and an aircraft fuel control valve closed configuration.

In another present aspect, the method further comprises transmitting the interpreted fuel control valve condition primary signal to a readout.

In a further present aspect, in the present method, receipt of the transmitted primary electromagnetic energy beam by the primary electromagnetic energy receiver is configured to evidence the aircraft fuel control valve open configuration.

In a further present aspect, in the present method, non-receipt of the transmitted primary electromagnetic energy beam by the primary electromagnetic energy receiver is configured to evidence the aircraft fuel control valve closed configuration.

The features, functions and advantages that have been discussed can be achieved independently in various aspects or may be combined in yet other aspects, further details of which can be seen with reference to the following description and the drawings.

### BRIEF DESCRIPTION OF THE DRAWINGS

Having thus described variations of the disclosure in general terms, reference will now be made to the accompanying drawings, which are not necessarily drawn to scale, and wherein:
FIG. 1 is an illustration of a vehicle in the form of an aircraft that can include the present aircraft fuel control valve assembly and present aircraft fuel control system, according to present aspects;
FIG. 2 is a box diagram of a fuel control system in an aircraft, according to present aspects;
FIG. 3A is a cross-sectional side view of a present aircraft fuel control valve assembly in a fuel line, with a movable valve in an open valve condition, according to present aspects;
FIG. 3B is a cross-sectional side view of the present aircraft fuel control valve assembly in a fuel line of the type shown in FIG. 3A, and with a movable valve in a closed valve condition, according to present aspects;
FIG. 4 is a flow diagram of a fuel control system that can incorporate the present aircraft fuel control valve assembly, according to present aspects;
FIG. 5A is a cross-sectional side view of a present aircraft fuel control valve assembly comprising primary and secondary electromagnetic energy beam transmitters and primary and secondary electromagnetic energy beam receivers in a fuel line, and with a movable valve in an open valve condition, according to present aspects;
FIG. 5B is a cross-sectional side view of a present fluid control valve assembly comprising primary and secondary electromagnetic energy beam transmitter and primary and secondary electromagnetic energy beam receivers in a fuel line, and with a movable valve in an open valve condition, according to present aspects;
FIG. 6 is a flowchart outlining a present method, according to present aspects;
FIG. 7 is a flowchart outlining a present method, according to present aspects; and
FIG. 8 is a flowchart outlining a present method, according to present aspects;

### DETAILED DESCRIPTION

Present aspects are directed to an aircraft fuel control valve state detection system, that can be placed in an aircraft fuel line that incorporates at least one presently disclosed aircraft fuel control valve assembly. Further present aspects are directed to a method of directly monitoring, directly determining, and directly confirming an aircraft fuel control valve "state" (referred to equivalently herein as an "aircraft fuel line control valve "state"), in real time, and on demand. The presently disclosed aircraft fuel control valve state detection system can directly monitor, directly detect, directly assess, and directly confirm an aircraft fuel line control valve "state" (valve "state" equivalently referred to herein as a "valve condition" and/or a "valve configuration" and/or a "valve position") for the purpose of directly determining and/or directly confirming, in real time, and on demand, the "state" of a movable valve in an aircraft fuel control valve assembly as being in either a "closed" state (e.g., a closed valve condition, closed valve configuration, closed valve position, etc.) or being in an "open" state (e.g., an open valve condition, open valve configuration, open valve position, etc.).

The presently disclosed direct aircraft fuel control valve state detection apparatuses, systems and methods can operate independently from, and in addition to, and in simultaneous concert with, existing indirect valve position measurement systems that operate indirectly by measuring, for example, motion of components and/or sub-components (e.g. parts, assemblies, etc., other than a valve itself) that are physically attached to or are otherwise in communication with a movable valve in a valve assembly. When the present apparatuses, systems, and methods are employed in addition to, or in simultaneous concert with, indirect valve-monitoring systems, the present apparatuses, systems, and methods for direct assessment of fuel control valve condition or valve "state" provide important independent and direct auxiliary fuel system monitoring redundancy for aircraft operations that can significantly impact certainty of optimal aircraft performance, and that can significantly increase flight safety.

According to present aspects, a presently disclosed aircraft fuel control valve assembly that comprises a movable valve that can travel and otherwise be configured to operate and "move", on demand, between a closed valve configuration (that impedes a fluid flow through the valve assembly), and an open configuration (that facilitates and otherwise allows a fluid flow through the valve assembly) further incorporates a valve state detection device incorporated and otherwise integrated into the aircraft fuel control valve assembly (referred to equivalently herein as the "valve assembly"), and that will directly ascertain a current valve "state" or "valve position" within the valve assembly.

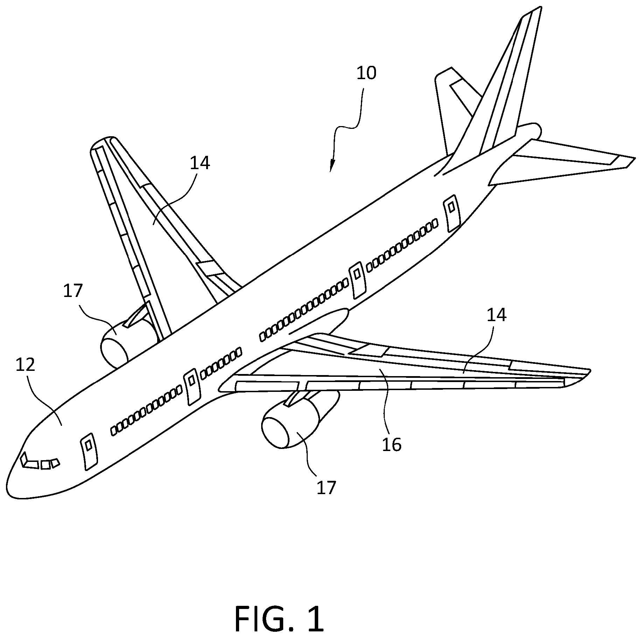

FIG. 1 shows a vehicle in the form of an aircraft 10 comprising a fuselage 12 and wing structures 14. Each of the wing structures 14 can contain a fuel delivery system 20 (referred to equivalently herein as "fuel system 20") not specifically shown in FIG. 1, that can include a fuel supply (equivalently referred to herein as a fuel source) that can be, for example, a fuel supply housed in fuels tanks 16 with the fuel tanks configured to be housed within the wing structures 14, and with the fuel supply and fuel delivery system in communication with an engine 17.

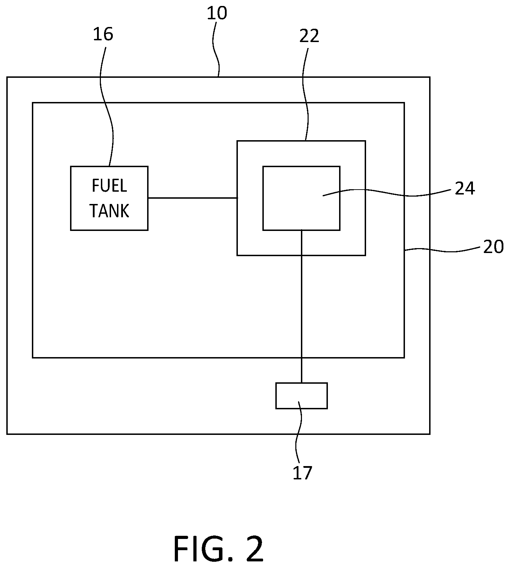

As shown in FIG. 2, aircraft 10 can comprise a fuel system 20 (referred to equivalently herein as an "aircraft fuel delivery system") for controlled delivery of a fuel supply from, for example, one or more fuel tank 16 (that can be located within a wing assembly of wing 14) into a fuel line 22, with the fuel line 22 in communication with at least one aircraft fuel control valve assembly 24 that can be in communication along the fuel line with a fuel delivery destination at, for example, an aircraft engine 17.

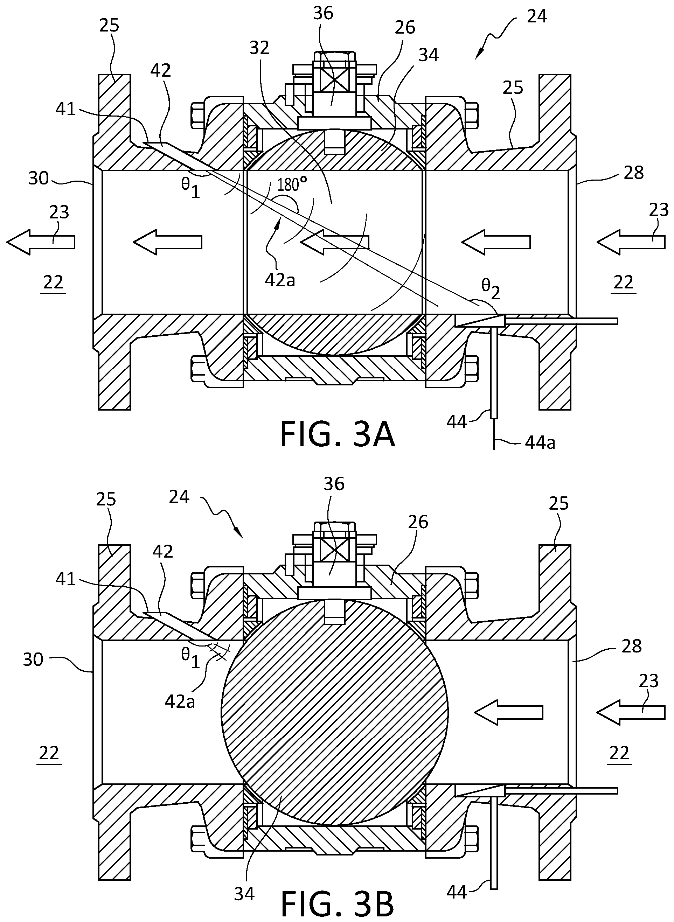

According to present aspects, FIGs. 3A and 3B are cross-sectional, side view illustrations of a present aircraft fuel control valve assembly 24 of the type that can be incorporated into a present aircraft fuel line control valve system. FIG. 3A illustrates the presently disclosed aircraft fuel control valve assembly 24 having a movable valve 34 within the assembly shown in an "open" position (referred to equivalently herein as an "open valve state", "open valve condition", "open valve configuration") that can facilitate and otherwise conditionally and selectively allow a flow of fluid through the aircraft fuel control valve assembly and through the aircraft fuel line within, and into which, the aircraft fuel line valve assembly is disposed and positioned, according to present aspects.

FIG. 3B illustrates presently disclosed aircraft fuel control valve assembly 24 having a movable valve 34 within the assembly shown in an "closed" position (referred to equivalently herein as an "closed valve state", "closed valve condition", "closed valve configuration") that can conditionally and selectively impede and can completely inhibit a flow of fluid through the aircraft fuel control valve assembly and similarly impede a flow of fluid through the aircraft fuel line assembly within, and into which, the aircraft fuel line valve assembly is disposed and positioned.

Although the fluid proceeding through the aircraft fuel control valve assembly will typically be a liquid fluid flow in the form of a liquid aircraft fuel, present aspects further contemplate use of the present valve assembly and present fuel line incorporating the present valve assembly also for the purpose of aircraft fuel line venting operation that can transport a non-liquid fluid, such as air or other gas (e.g., nitrogen, etc.), through the aircraft fuel line and through the aircraft fuel control valve assembly.

As further shown in FIG. 3A, and according to present aspects, aircraft fuel control valve assembly 24 comprises a fuel control valve housing 25 that comprises a valve body 26 that comprises an internal valve chamber 32 bounded by the internal area within the interior of the valve body 26, with the valve chamber 32 further bounded by the valve inlet 28 and the valve outlet 30, and with valve body 26 positioned immediately adjacent to and situated between valve inlet 28 and valve outlet 30. Depending upon the configuration of the valve "state" within the aircraft fuel control valve assembly 24, the aircraft fuel control valve assembly 24 is configured to facilitate, inhibit, impede, terminate (e.g., completely "block"), and otherwise control a fluid flow (e.g. a liquid or gaseous fluid flow) through an aircraft fluid line (that can be an aircraft fuel line) comprising the aircraft fuel control valve assembly.

FIG. 3A further shows a movable valve 34, shown in FIG. 3A as, but not limited to, a ball valve. Movable valve 34 as shown in FIG. 3A is configured to be dimensioned such that the ball valve comprises an incomplete spherical dimension about its three-dimensional spherical perimeter such that, through rotational movement of the ball valve (that can be reciprocating rotational movement), a valve state in the valve chamber 32, (into which the movable valve is placed), can be established that is either an "open" valve state, or a "closed" valve state as the ball valve move through a range of rotational motion between the "open" valve state and the "closed" valve state.

In this "open" valve state, the fluid flow 23 from, for example, a fluid supply that can be, for example, a fuel supply (also referred to equivalently herein as a "fuel source") that can be maintained within a fuel tank, and that is not shown in FIG. 3A, proceeds and is otherwise directed from the fluid supply through a fluid flow line 22 to the aircraft fuel control valve assembly 24 with the fuel supply configured to enter into the aircraft fuel control valve assembly 24 at the valve inlet 28 (referred to equivalently herein as the "aircraft fuel control valve assembly inlet 28"). When the movable valve 34 is in the "open" state, passage of the fluid flow 23 through the valve chamber 32 of the aircraft fuel control valve assembly 24 is established, and the fluid flow 23 proceeds into and through valve chamber 32, and then proceeds from (e.g., exits) the valve chamber 32 and the aircraft fuel control valve assembly 24 through valve outlet 30 ((referred to equivalently herein as the "aircraft fuel control valve assembly outlet 30").

According to present aspects, the presently disclosed aircraft fuel control valve assembly is configured to directly, conclusively, and independently ascertain a valve "state" (i.e., a valve "condition"), in real time, on demand, and/or continuously, by directing a primary electromagnetic energy that can be beam of electromagnetic energy in the form of, for example, "light" that can include, for example, a light beam, from an electromagnetic energy transmitter to an electromagnetic energy receiver. The transmitters and receivers, according to present aspects, can be located at an end of, for example, a fiber optic cable, with a transmitter assembly and/or a receiver assembly further comprising electronics and supporting architecture (that can be in communication with the fiber optic cable) that can be physically located outside of the present valve housings including being physically located outside of the valve chamber.

According to a present aspect, at least one electromagnetic energy transmitter is integrated into and positioned in the valve assembly at a position outside one end of the valve body comprising the valve chamber (e.g., the inlet end or outlet end of the valve chamber), with the at least one electromagnetic energy receiver integrated into and positioned in the valve assembly at a position outside of an opposing end of the valve body and the valve chamber (e.g., the inlet end or outlet end of the chamber that linearly opposes the position of the electromagnetic energy transmitter), with the at least one electromagnetic energy receiver further positioned to oppose and face the electromagnetic energy transmitter for the purpose of receiving, for example, a transmitted electromagnetic energy beam from the electromagnetic energy transmitter.

According to present aspects, a primary electromagnetic energy transmitter configured to emit and direct a beam of electromagnetic energy is paired with a primary electromagnetic energy receiver that is positioned and is otherwise configured to receive the transmitted beam of electromagnetic energy from the transmitter that is transmitted across and within the valve chamber in the open valve state. Because the transmitter and receiver are located at positions that oppose one another and are located at positions that are across the valve chamber from one another (e.g., located at opposing positions from one another across the valve chamber), a transmitted beam of electromagnetic energy (e.g., transmitted from the transmitter) can only be received by the receiver when the valve is in an open "state" (as the transmitted beam would be "blocked" from successfully traversing the length/width of the valve chamber if the valve was in a "closed" position (e.g., closed state); a valve position where the beam would be unable to proceed in an unrestricted fashion into and/or through the valve chamber, and the beam would be unable to reach and be received by the receiver.

As shown in FIG. 3A, and according to present aspects, for the substantially linear beam of transmitted electromagnetic energy to travel into and across the chamber (e.g., from one end of the chamber to the other end - referred to equivalently herein as the valve chamber length and/or the valve chamber width), according to one orientation, a primary electromagnetic energy transmitter 42 comprising or in communication with a primary electromagnetic energy source 41 is integrated into the valve outlet 30. The primary electromagnetic energy transmitter 42 is shown positioned to deliver a primary electromagnetic energy beam 42a into, through, and across valve chamber 34 and directly toward the primary electromagnetic energy receiver 44.

Since the primary electromagnetic energy beam 42a, (that can be, for example a collimated beam of light) can travel in a substantially linear direction, as shown in FIG. 3A, the primary transmitter can positioned at an angle relative to the horizontal axis of a flow path through the valve assembly (represented by Θ1 shown in FIG. 3A) such that a substantially linear light beam (e.g., a straight light beam) can travel from the transmitter across the valve chamber and be received by a receiver positioned within or just outside of the valve chamber and positioned "opposing" or "opposite" the transmitter and at a distance from the transmitter that can be approximately equal to or slightly greater than the length of the valve chamber. The directional orientation of the transmitted light beam across the valve chamber is shown in FIG. 3A as being a substantially diagonal directional orientation across and through the valve chamber when the movable valve in the valve chamber (and, consequently, the valve chamber itself) are configured into the "open" valve state.

According to present aspects, the aircraft fuel control valve assembly can comprise more than one integrated transmitter/receiver pair, at least for purposes of providing integral redundancy into the valve assembly such that, for example, should one transmitter or receiver temporarily malfunction, a second transmitter/receiver pair can initiate and operate to continue the direct assessment of the "state " of the valve as being "open" or "closed", etc., in the present aircraft fuel control valve assembly. For present purposes, when two transmitter/receiver pairs are present in the system and assembly, the two transmitter/receiver pairs are described and designated as comprising "primary" and "secondary" electromagnetic energy transmitters configured to emit and otherwise direct a corresponding "primary" and "secondary" electromagnetic energy beam to a corresponding "primary" and "secondary" electromagnetic energy receiver.

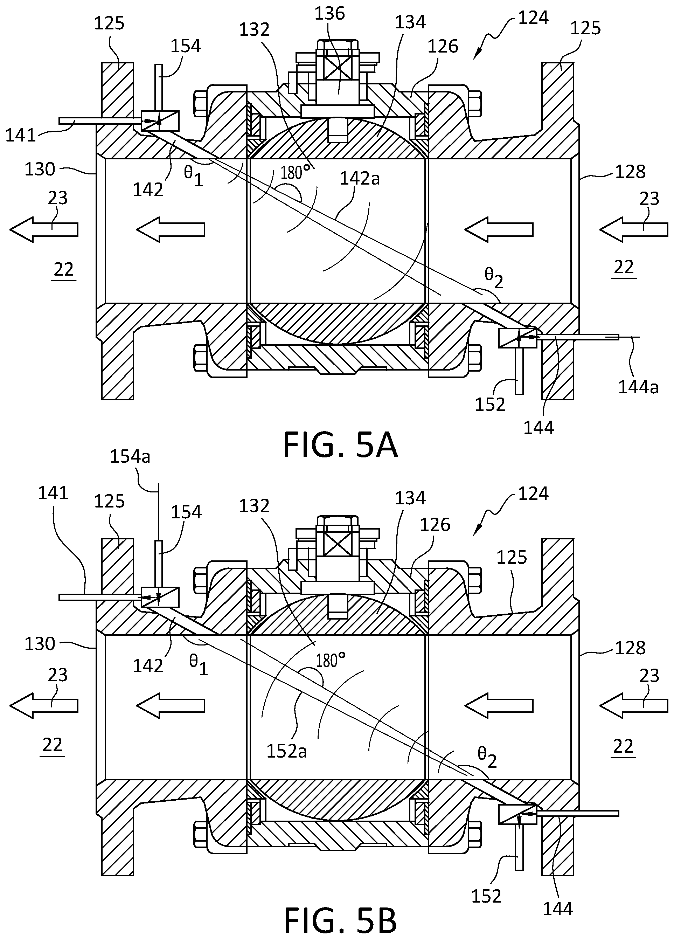

FIGs. 3A and 3B show a single transmitter/receiver pair designated, described, and enumerated in FIGs. 3A and 3B as the "primary" electromagnetic energy transmitter 42 and "primary" electromagnetic energy receiver 44. To provide, for example, system redundancy, as described herein, FIGs. 5A and 5B show two transmitter/receiver pairs designated, described, and enumerated as the "primary" electromagnetic energy transmitter 142 and "primary" electromagnetic energy receiver 144 as well as showing a "secondary" electromagnetic energy transmitter 152 and "secondary" electromagnetic energy receiver 154 integrated and otherwise incorporated into the present aircraft fuel control valve assembly, with the secondary receiver 154 configured to receive electromagnetic energy from the primary energy source via the primary energy transmitter 142 and/or the secondary energy source via the secondary energy transmitter 152.

As shown in FIGs. 3A and 3B, and as described herein, even though one transmitter/receiver pair 42,44 is integrated into the aircraft fuel control valve assembly 24 (and no "secondary" transmitter/receiver pair is present in aircraft fuel control valve assembly 24), the electromagnetic energy transmitter 42 is equivalently referred to herein as the "primary" electromagnetic energy transmitter 42; and the electromagnetic energy receiver 44 is equivalently referred to herein as the "primary" electromagnetic energy receiver 44.

In operation, according to present aspects, as shown in FIG 3A, the movable valve 34 of aircraft fuel control valve assembly 24 can be secured into an aircraft fuel line, with the movable valve 34 configured into an open state to result in the aircraft fuel control valve assembly 34 being in an open state that allows a controlled fluid flow 23 into, through, and out from the valve chamber 32 and valve outlet 30 of the aircraft fuel control valve assembly 24. As Primary electromagnetic energy transmitter 42 is integrated into the fuel control valve housing 25 at a location at the valve outlet 30 and positioned at a selected angle to direct the primary electromagnetic energy beam 42a in a substantially linear and diagonal direction into a portion of the valve outlet 30, into and completely through valve chamber 32, and into a portion of valve inlet 28 where the electromagnetic energy receiver 44 is positioned.

According to present aspects, the primary electromagnetic energy transmitter 42 can be, can comprise, or can be in communication with, an electromagnetic energy source. That is, the primary electromagnetic energy transmitter 42 can emit and/or transmit electromagnetic energy from the transmitter 42 into the flow path established within the aircraft fuel control valve assembly 24. The established flow path can comprise the valve inlet, the valve chamber (established within the valve body), and the valve outlet. In one example, the transmitted electromagnetic energy transmitted from the primary electromagnetic energy transmitter 42 is transmitted as a primary electromagnetic energy beam of light 42a (referred to equivalently herein as the "primary light beam 42a") at a wavelength ranging from about 850 nm to about 1550 nm. The primary light beam can be generated from a light source that can be and that is not intended to be limited to, for example, a laser, a light-emitting diode (LED), etc., that can be in communication with, or that can itself comprise, a power source (e.g., a battery, etc.).

The primary light beam 42a is selected to be generated and emitted from the primary transmitter at an intensity and wavelength sufficient for the primary light beam to travel from the primary transmitter and be received by the primary receiver, and that is more fully disclosed herein. That is, the primary light beam is selected to travel the distance, within the aircraft fuel control valve assembly, from the primary transmitter to the primary receiver.

In addition, recognizing that, when the valve assembly is in the open state, an operating fluid flow (e.g., liquid fuel, gas, etc.) will traverse the flow path through the valve assembly in the valve open state, the primary light beam is further configured to have an intensity and wavelength sufficient to pass through an actively flowing material that can be concurrently passing into, through, and out from the aircraft fuel control valve assembly.

Still further, since a liquid flow through the present control valve assembly can be an aircraft fuel, present aspects contemplate an electromagnetic energy beam (e.g., that can be a light beam) as generating substantially no heat, and further having an intensity and wavelength that will not adversely impact a volatile aircraft fuel or fuel vapor flow through the present aircraft fuel control valve assembly. In one present example, a light beam can be generated by the transmitter and received by the receiver with the light beam having a light intensity comprising a maximum power level of 200mW, with minimum power levels dependent upon receiver noise levels, etc., and with the electromagnetic energy that can be in the form of electromagnetic energy as light that can further be in the form of an electromagnetic energy light beam having a wavelength ranging from about 850 nm to about 1550 nm.

As shown in FIG. 3A, in the open valve assembly configuration, the aircraft fuel control valve assembly 24 comprises a primary electromagnetic energy receiver 44 that is that is integrated into the fuel control housing 25 and is further configured to receive, for example, the primary light beam 42a that is directed from the primary electromagnetic energy transmitter 42 through the valve chamber 32. The primary electromagnetic energy receiver 44 (referred to equivalently herein as the "primary receiver") can be a photodetector that can be a fiber optic link to a photodetector (referred to equivalently herein as a "photosensor") that is selected to receive, sense, and otherwise detect the primary light beam 42a that is transmitted from the primary electromagnetic energy transmitter 42.

The photodetector, upon receiving a transmitted light beam from the transmitter, is further able to generate and send a signal from the receiver evidencing the receipt of the light beam from the transmitter, and further evidencing that the movable valve in the aircraft fuel control valve assembly is in the "open" configuration. The photodetector can be and/or can comprise, and is not limited to, for example, a MSM photodetector, a photodiode, an avalanche photodiode, (APD), a phototransistor, a charge-coupled device (CCD), CMO image sensor (CIS), a photomultiplier tube (PMT), etc.

According to present aspects, when the movable valve 34 of the aircraft fuel control valve assembly is operably configured into a "closed" state, as shown in FIG. 3B, the flow path 23 of a fluid attempting to traverse or otherwise be directed along and through a fuel line incorporating the present aircraft fuel control valve assembly, will be impeded and otherwise completely "blocked"; effectively terminating a fluid flow through the control valve assembly. As shown in FIG. 3B, movable valve 34 (shown as a movable ball valve) is shown as having been now "moved" through a range of motion from an "open" movable valve configuration and./or position and/or "state" (and that can facilitate a fluid throughflow, as shown in FIG. 3A), into the "closed" movable valve configuration shown in FIG. 3B that can completely impede and effectively terminate a fluid flow 23 (e.g., a fluid flow through a fluid flow path) through the aircraft fuel control valve assembly 24. In addition to blocking a fluid flow path through the valve assembly, in the "closed" valve configuration, the primary light beam 42a emitted from the primary electromagnetic energy transmitter (that is positioned at one side of the valve chamber) will also be "blocked" from entering and traversing the valve chamber 32, such that the primary light beam 42a cannot reach and cannot otherwise be received by the primary electromagnetic energy receiver 44 (e.g., the primary receiver that is located at a position that is beyond or outside of an opposing side of the valve chamber relative to the transmitter position).

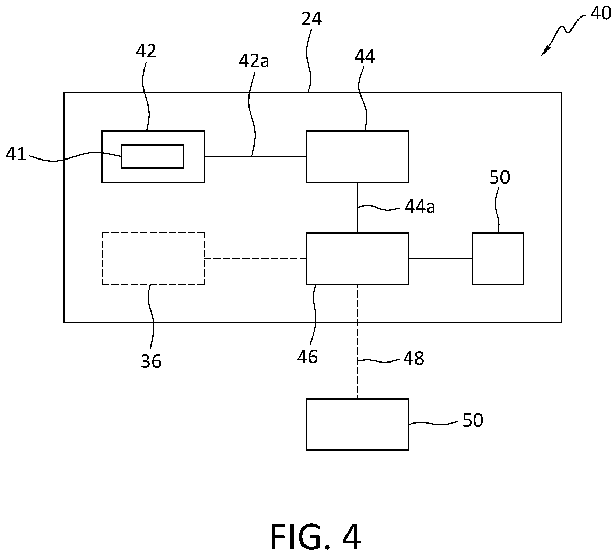

FIG. 4 is a box diagram showing a present aircraft fuel control valve state detection system 40 (referred to equivalently herein as a "valve state detection system 40"). As shown in FIG. 4, valve state detection system 40 comprises the presently disclosed aircraft fuel control valve assembly 24 that comprises primary electromagnetic energy transmitter 42 having or that is otherwise in communication with an electromagnetic energy source 41. According to present aspects, when the valve state detection system 40 is in operation, the primary electromagnetic energy transmitter 42 is configured to deliver a primary electromagnetic energy beam 42a and direct the beam 42a to the primary electromagnetic energy receiver 44 contained within the aircraft fuel control valve assembly 24.

In one example, in an "open" valve condition, upon receiving the directed primary electromagnetic energy beam 42a, the primary electromagnetic energy receiver 44 generates a valve condition primary signal 44a (referred to equivalently as a " fuel control valve condition primary signal 44a", and "valve state primary signal 44a" and "fuel control valve state primary signal 44a") with the generated valve condition primary signal 44a delivered to processor 46 (shown in FIG. 4 as being integrated into aircraft fuel control assembly 24, and that can also be located outside of and/or remotely from aircraft fuel control assembly 24, with the processor 46 configured to interpret the valve condition primary signal 44a. In a present example, the processor 46, is further configured to generate and send a processor signal 48 to one or more readouts 50 that can be, for example, located within or outside of the valve state detection system 40. According to a present example, depending on the type of movable valve present in the aircraft fuel control valve assembly 24, an actuator 36 can be in communication with the movable valve.

According to further present aspects, (and, for example, to at least provide selected apparatus and system redundancy), the presently disclosed aircraft fuel control valve state detection system 40 and the aircraft fuel control valve assembly 24 contained in the system 40 can further comprise more than one electromagnetic energy transmitter/ electromagnetic energy receiver "pair" located and otherwise positioned within the aircraft fuel control valve assembly 24 to deliver and receive additional electromagnetic energy beams. Present aspects shown in the FIGs herein are not intended to limit the number of transmitter/receiver "pairs" and otherwise limit the number of transmitted and received electromagnetic energy (e.g., light) beams. FIGs. 5A and 5B illustrate a non-limiting present example showing two (2) electromagnetic energy transmitter/electromagnetic energy receiver "pairs" and that are designated as being "primary" and "secondary" electromagnetic energy transmitter/electromagnetic energy receiver "pairs" configured to transmit and receive a primary and secondary electromagnetic energy beam, respectively.

FIGs. 5A and 5B both depict a present aircraft fuel control valve assembly 124 in an "open valve state". In FIG. 5A, a primary electromagnetic energy beam 142a (that can be a light beam) is generated, transmitted and received in a fashion and operation similar to that described herein in connection with the present aircraft fuel control valve assembly 24 shown in FIG. 3A. In addition, as shown in FIG. 5A, a secondary electromagnetic energy transmitter and a secondary electromagnetic energy receiver are positioned integrally in the fuel control valve housing 125 of the aircraft fuel control valve assembly 124.

As shown in FIG. 5A, a secondary electromagnetic energy beam is not being generated by the secondary electromagnetic energy transmitter. In FIG. 5B, a secondary electromagnetic energy beam 152a (that can be a light beam) is shown being generated by and transmitted by the secondary electromagnetic energy transmitter 152, with the secondary electromagnetic energy beam 152a received by the secondary electromagnetic energy receiver 154; and with secondary beam 152a directed within the valve chamber 132 in a beam direction that is opposite from the direction of the primary beam 142a (shown in FIG. 5A). In addition, according to present aspects, the secondary beam 152a from the secondary electromagnetic energy transmitter 152 can be sensed by the primary receiver 144 in order to provide built-in-test (BIT) capability to the primary receiver system. Likewise, as described herein, the secondary receiver 154 can "BIT check" the proper operating condition of the primary electromagnetic energy transmitter 142. Such "BIT checking" of the present systems provides further system redundancy to ensure that it is not the present detection system malfunctioning in the event that a valve assembly is detected as malfunctioning.

Returning to FIG. 5A, and according to present aspects, aircraft fuel control valve assembly 124 comprises a fuel control valve housing 125 that comprises a valve body 126 that comprises an internal valve chamber 132 within the valve body 1126, with valve body 126 positioned immediately adjacent to and situated between valve inlet 128 and valve outlet 130. Depending upon the configuration of the valve "state" within the aircraft fuel control valve assembly 124, the aircraft fuel control valve assembly 124 is configured to facilitate, impede, terminate (e.g., completely "block"), and otherwise control a fluid flow (e.g. a liquid or gaseous fluid flow) through an aircraft fluid line (that can be an aircraft fuel line) comprising the aircraft fuel control valve assembly.

FIG. 5A further shows a movable valve 134, shown in FIG. 5A as, but not limited to, a ball valve. Movable valve 134 as shown in FIG. 5A is configured to be dimensioned such that the ball valve comprises an incomplete spherical dimension about its three-dimensional spherical perimeter such that, through rotational movement of the ball valve, a valve chamber 132, (into which the movable valve is placed), in the "open" state can be established. In this "open" valve state, the fluid flow 123 (from, for example, a fluid supply (that can be, for example, a fuel supply maintained within a fuel tank, and that is not shown in FIG. 5A) proceeds from the fluid supply through a fluid flow line 22 to the aircraft fuel control valve assembly 124 and enters into the aircraft fuel control valve assembly 124 at the valve inlet 128. When the movable valve 134 is in the "open" state, a fluid flow passage through the valve chamber 132 of the aircraft fuel control valve assembly 124 is established, and the fluid flow 23 proceeds into and through valve chamber 132, and then proceeds from the chamber 132 through valve outlet 130.

As shown in FIG. 5A, and according to present aspects, for the substantially linear beam of transmitted electromagnetic energy to travel into and across the chamber (e.g., from one "end" or "side" of the chamber to the other "end" or side"), according to one orientation, a primary electromagnetic energy transmitter 142 comprising a primary electromagnetic energy source 141 is integrated into the valve outlet 130 of the valve housing 125, with the primary electromagnetic energy transmitter 142 shown positioned to deliver a primary electromagnetic energy beam 142a into and across valve chamber 132 and directly toward the primary electromagnetic energy receiver 144. Since the primary electromagnetic energy beam 142a, (that can be, for example a collimated beam of light) can travel in a substantially linear direction, as shown in FIG. 5A, the primary transmitter can be positioned at an angle of about 180 degrees across the valve chamber (e.g., on a straight line, or "linearly") from the primary receiver in an orientation that can be a diagonal orientation across and through the valve chamber when movable valve 134 in the valve chamber 132 and the valve chamber itself are configured into the "open" state.

In operation, according to present aspects, as shown in FIG 5A, the movable valve 134 of aircraft fuel control valve assembly 124 can be secured into, and can otherwise be placed in communication with, an aircraft fuel line, with the movable valve 134 configured into an open state to result in the aircraft fuel control valve assembly 134 being in an open state that allows a controlled fluid flow 23 into, through, and out from the valve chamber 132 of the aircraft fuel control valve assembly 124. Primary electromagnetic energy transmitter 142 is integrated into the fuel control valve housing 125 and positioned to direct primary electromagnetic energy beam 142a in a substantially linear and diagonal direction into a portion of the valve outlet 130, into and completely through valve chamber 132, and into a portion of valve inlet 128 where the beam arrives at and is received by the primary electromagnetic energy receiver 144.

FIG. 5A further shows aircraft fuel control valve assembly 124 comprising a secondary electromagnetic transmitter 152 positioned at, and/or near, and/or in close proximity to the location of the primary electromagnetic energy receiver 144. Aircraft fuel control valve assembly 124, as shown in FIG. 5A, further comprises a secondary electromagnetic energy receiver 154 positioned at, and/or near, and/or in close proximity to the location of the primary electromagnetic energy transmitter 142.

FIG. 5B, shows the aircraft fuel control valve assembly 124 of the type as shown in FIG. 5A, but with the primary transmitter 142 not operating and not emitting or directing a primary light beam 142a. Instead, as shown in FIG. 5B, and according to a present example, secondary electromagnetic energy transmitter 152 is shown generating and delivering a secondary electromagnetic energy beam, for example, in the form of a secondary light beam 152a, to the secondary electromagnetic energy receiver 154. Secondary light beam 152a is shown traveling in a secondary beam direction that is opposite to the direction of the primary light beam 142a (shown in FIG. 5A).

Although not shown in FIGs. 5A and 5B, according to present aspects, the primary and secondary transmitter/receiver pairs can be located in distinct locations from each other such that the primary and secondary light beams (that can travel in opposing directions along the same beam pathway) would not occupy or travel along the same beam path (albeit in generally opposing directions). For example, in one present example, the primary and secondary transmitter/receiver pairs can generate the primary and secondary beam, concurrently (both the primary and secondary beam generated and operating at the same time).

In another present example, the primary and secondary transmitter/receiver pairs can generate the primary and secondary beam one at a time; with the primary or secondary transmitter/receiver pair generating their respective primary and secondary beam only in the event that a component in the primary or secondary transmitter/receiver "pair" fails. That is, according to present aspects, the presently disclosed aircraft fuel control valve assembly and the present valve state detection systems incorporating the present aircraft fuel control valve assembly afford multiple elements of system safety and redundancy regarding monitoring conclusively a valve "state" or condition through the ability to directly monitor and directly assess a valve state independently of, and in addition to, existing valve monitoring systems and apparatuses that can indirectly assess a valve condition by measuring a component attached to or otherwise in communication with the valve itself (e.g., an actuator attached or in communication with a valve itself, etc.). As stated herein, such typical indirect valve monitoring operations could inaccurately assess a valve "state" in the event that, for example, the physical actuation device disengages from the valve or is otherwise unable to drive the movement of the valve. In such an indirect valve state monitoring system, physical and/or mechanical disengagement of a monitored element connected to a valve may result in a system that could not accurately reflect the current positioning of a valve in a fuel line valve assembly.

In addition, within the presently disclosed aircraft fuel control valve assembly, multiple electromagnetic energy beam transmitter/receiver pairs can be incorporated to afford redundancy with respect to continued monitoring of a valve condition or "state", in the event that an element of one electromagnetic energy beam transmitter/receiver pair malfunctions, etc.

As mentioned herein, light beam intensity and light wavelength is selected to ensure that the beam can traverse the distance from the transmitter to the receiver, can traverse a flow path that is simultaneously occupied by a fluid flow, and that will not chemically or otherwise disturb a liquid flow that can be a fuel flow. The distance travelled by the light beam between transmitter and receiver is impacted by the dimension of the valve chamber and the overall dimension of the aircraft fuel control valve assembly. In one present example, the valve chamber can have a width ranging from about 2 inches to about 4 inches. In another present example, the diagonal light beam path from transmitter to receiver can have a distance ranging from about 4 inches to about 5 inches. In a further present example, the present valve chamber can be about 2 inches in diameter, with the present valve chamber further comprising a length of about 5 inches as measured from inlet to outlet (e.g., having a valve body length of about 5 inches).

According to present aspects, the electromagnetic energy transmitter and the electromagnetic energy receiver that can be integrated into the fuel control valve housing can be removable from the housing to, for example, facilitate maintenance, replacement, inspection, etc. of the transmitter and/or receiver. In one example, the transmitter and receiver are both configured to be incorporated into the fuel control valve housing. In another present example, the transmitter and receiver can be fixedly attached to the interior of the fuel control valve housing.

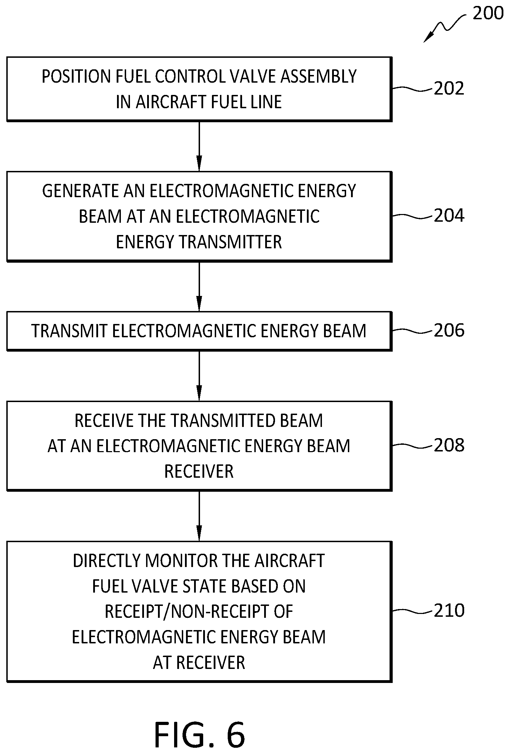

FIGs. 6, 7, and 8 are flowcharts outlining present methods for directly monitoring and independently monitoring an aircraft fuel valve state in an aircraft fuel control valve assembly, in real time, and on demand. FIG. 6 outlines a present aspect directed to a present method 200 for directly monitoring an aircraft fuel valve state in an aircraft fuel control valve assembly, with the method 200 comprising positioning 202 the presently disclosed aircraft fuel control valve assembly of the type disclosed herein in an aircraft fuel line, with the aircraft fuel control valve assembly comprising an aircraft fuel control valve housing, The method 200 further comprises generating 204 an electromagnetic energy that can be a primary electromagnetic energy beam, and that can be a light beam (and that can be a primary electromagnetic energy light beam) at the primary electromagnetic energy transmitter, transmitting 206 from the primary electromagnetic energy transmitter, and into the valve chamber, the primary electromagnetic energy beam to form a transmitted primary electromagnetic energy beam, receiving 208 at the primary electromagnetic energy receiver the transmitted primary electromagnetic energy beam transmitted from the primary electromagnetic energy transmitter, and directly monitoring 210 the aircraft fuel control valve state based on at least one of the receipt and the non-receipt of the transmitted primary electromagnetic energy beam by the primary electromagnetic energy receiver.

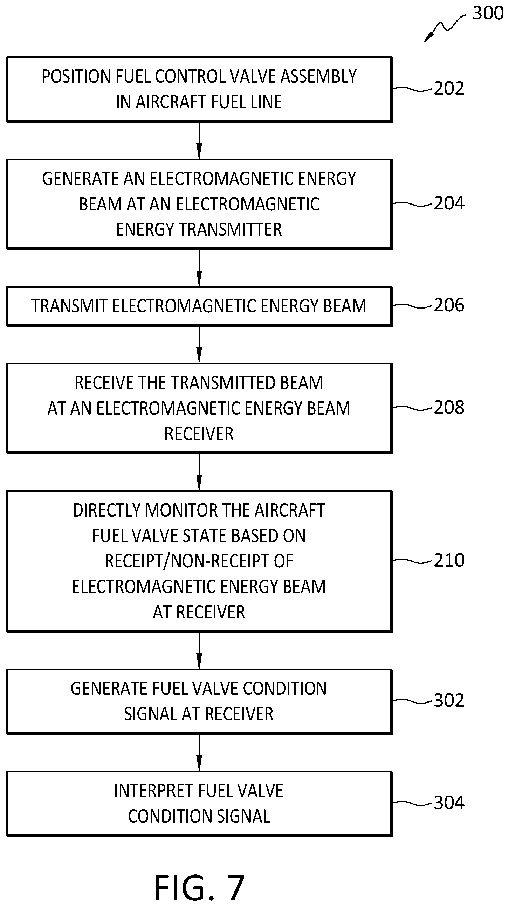

FIG. 7 outlines a present aspect directed to a present method 300 that comprises the elements of method 200 and further comprises, upon the primary electromagnetic energy receiver receiving 210 the transmitted primary electromagnetic energy beam, generating 302 a fuel control valve condition primary signal at the primary electromagnetic energy receiver, and interpreting 304 the fuel control valve condition primary signal to form an interpreted fuel control valve condition primary signal (for example, via a processor configured to interpret a fuel control valve condition primary signal sent to the processor from the receiver), with the interpreted fuel control valve condition primary signal corresponding to the aircraft fuel control valve state, with the aircraft fuel control valve state comprising at least one of an aircraft fuel control valve open configuration and an aircraft fuel control valve closed configuration.

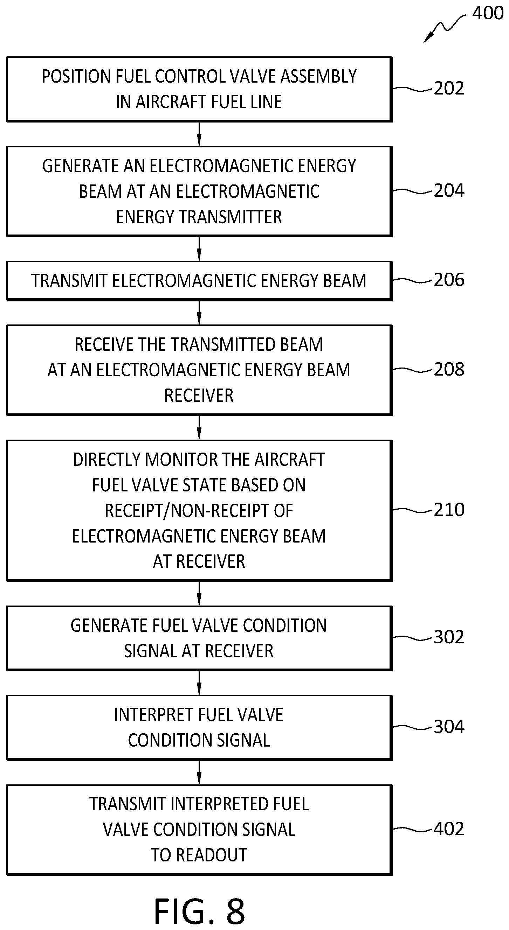

FIG. 8 outlines a present aspect directed to a present method 400 that comprises the elements of both of present methods 200 and 300 and further comprises transmitting 402 the interpreted fuel control valve condition primary signal to a readout, including transmitting the interpreted fuel control valve condition primary signal interpreted by the processor to at least one readout.

In a further present aspect, in the present methods 200, 300, 400, receipt of the transmitted primary electromagnetic energy beam by the primary electromagnetic energy receiver evidences the aircraft fuel control valve open configuration.

In a further present aspect, in the present methods 200, 300, 400, non-receipt of the transmitted primary electromagnetic energy beam by the primary electromagnetic energy receiver evidences the aircraft fuel control valve closed configuration.

According to present aspects, the methods 200, 300, 400, shown, respectively, in FIGs. 6, 7, 8, and disclosed herein, can employ the presently disclosed aircraft fuel control valve assemblies and the presently disclosed aircraft fuel control valve state detection systems disclosed herein and shown in one or more of FIGs. 1, 2, 3A, 3B, 4, 5A, and 5B, and as described herein.

The term "substantially" as used herein means that a particular physical element, physical positioning, and/or physical shape, orientation, etc., is almost completely or is nearly achieved. That is, for example, according to present aspects, an angle value that is described as being "substantially 180 degrees" is meant to include "nearly" 180 degrees. Similarly, a "substantially linear direction" is meant to include a "nearly" linear or "straight" direction. Still further, an element positioned "substantially" within a valve chamber means that an element is almost entirely and/or or almost completely contained within a valve chamber.

The present aspects may, of course, be carried out in other ways than those specifically set forth herein without departing from essential characteristics of the present disclosure. The present aspects are to be considered in all respects as illustrative and not restrictive, and all changes coming within the meaning and equivalency range of the appended claims are intended to be embraced therein.

The disclosure comprises the following subject matter.

An aircraft fuel control valve assembly comprising: a fuel control valve housing, said fuel control valve housing comprising: a valve body, a valve inlet, a valve outlet, a valve chamber, said valve chamber established by an area within the aircraft fuel control valve assembly, said valve chamber further established between the valve inlet and the valve outlet, a movable valve, said movable valve positioned substantially within valve chamber; the aircraft fuel control valve assembly further comprising: a primary electromagnetic energy transmitter integrated into the aircraft fuel control valve assembly, said primary electromagnetic energy transmitter configured to direct a primary electromagnetic energy beam from the primary electromagnetic energy transmitter into and across the valve chamber, said primary electromagnetic energy transmitter further comprising an electromagnetic energy source, and a primary electromagnetic energy receiver integrated into the aircraft fuel control valve assembly, said primary electromagnetic energy receiver configured to receive the primary electromagnetic energy beam from the primary electromagnetic energy transmitter, said primary electromagnetic energy receiver configured to generate a valve condition primary signal.

The movable valve may be configured to comprise an operating range of motion between an open valve configuration and a closed valve configuration.

The aircraft fuel control valve assembly may further comprise an actuator, said actuator in communication with the movable valve, said actuator configured to move the movable valve between the open valve configuration and the closed valve configuration.

The aircraft fuel control valve assembly may further comprise a secondary electromagnetic energy transmitter integrated into the aircraft fuel control valve assembly, said secondary electromagnetic energy transmitter configured to direct a secondary electromagnetic energy beam from the secondary electromagnetic energy transmitter into the valve chamber, said secondary electromagnetic energy transmitter further comprising a secondary electromagnetic energy source; and a secondary electromagnetic energy receiver integrated into the fuel aircraft fuel control valve assembly, said secondary electromagnetic energy receiver configured to receive at least one of the primary electromagnetic energy beam from the primary electromagnetic energy transmitter and the secondary electromagnetic energy beam from the secondary electromagnetic energy transmitter, said secondary electromagnetic energy receiver configured to generate a valve condition secondary signal.

The electromagnetic energy source may be at least one of a laser and a light emitting diode, said electromagnetic energy source may be configured to generate a light beam to form a generated light beam, said generated light beam comprising a wavelength ranging from about 850 nm to about 1550 nm.

The primary electromagnetic energy transmitter may be in communication with a primary electromagnetic energy source, said primary electromagnetic energy source may comprise at least one of a laser and a light emitting diode, said primary electromagnetic energy source may be configured to generate a light beam to form a generated light beam, said generated light beam having a wavelength ranging from about 850 nm to about 1550 nm.

The generated light beam may be configured to extend from the primary electromagnetic energy transmitter to the primary electromagnetic energy receiver along a substantially straight line, said substantially straight line extending through the valve chamber from the primary electromagnetic energy transmitter to the primary electromagnetic energy receiver when the movable valve is in the open valve configuration.

The generated light beam may be configured to extend diagonally through the valve chamber from the primary electromagnetic energy transmitter to the primary electromagnetic energy receiver when the movable valve is in the open valve configuration.

An aircraft comprising the aircraft fuel control valve assembly as described above. An aircraft fuel control valve assembly state detection system for determining an aircraft fuel control valve assembly state, said aircraft fuel control valve assembly state detection system comprising: an aircraft fuel control valve assembly positioned within an aircraft fuel line, said aircraft fuel control valve assembly comprising: a fuel control valve housing, said fuel control valve housing comprising, a valve body, a valve inlet, a valve outlet, a valve chamber, said valve chamber established by an area within the aircraft fuel control valve assembly, said valve chamber further established between the valve inlet and the valve outlet, a movable valve, said movable valve positioned substantially within valve chamber, a primary electromagnetic energy transmitter integrated into the aircraft fuel control valve assembly, said primary electromagnetic energy transmitter configured to direct a primary electromagnetic energy beam from the primary electromagnetic energy transmitter into and across the valve chamber, said primary electromagnetic energy transmitter further comprising an electromagnetic energy source; a primary electromagnetic energy receiver integrated into the aircraft fuel control valve assembly, said primary electromagnetic energy receiver configured to receive the primary electromagnetic energy beam from the primary electromagnetic energy transmitter, said primary electromagnetic energy receiver configured to generate a valve condition primary signal; and a processor in communication with the primary electromagnetic energy receiver, said processor configured to receive the valve condition primary signal, said processor further configured to interpret the valve condition primary signal generated by the primary electromagnetic energy receiver to form an interpreted valve condition primary signal, said interpreted valve condition primary signal corresponding to the aircraft fuel control valve state.

The electromagnetic energy source may be at least one of a laser and a light emitting diode configured to generate a light beam, said light beam having a wavelength ranging from about 850 nm to about 1550 nm.

The aircraft fuel control valve state detection system may further comprise a readout in communication with the processor.

The aircraft fuel control valve assembly state detection system may further comprise a valve actuator, said valve actuator in direct communication with the movable valve, said actuator configured to move the movable valve between an open valve configuration and a closed valve configuration.

The aircraft fuel control valve assembly state detection system may further comprise a secondary electromagnetic energy transmitter integrated into the aircraft fuel control valve assembly, said secondary electromagnetic energy transmitter configured to direct a secondary electromagnetic energy beam from the secondary electromagnetic energy transmitter into and across the valve chamber, said secondary electromagnetic energy transmitter further comprising a secondary electromagnetic energy source; and a secondary electromagnetic energy receiver integrated into the aircraft fuel control valve assembly, said secondary electromagnetic energy receiver configured to receive at least one of the primary electromagnetic energy beam from the primary electromagnetic energy transmitter and the secondary electromagnetic beam from the secondary electromagnetic energy transmitter, said secondary electromagnetic energy receiver configured to generate a valve condition secondary signal.

The secondary electromagnetic energy source may be configured to generate a light beam, said light beam having a wavelength ranging from about 850 nm to about 1550 nm.

A method for directly monitoring an aircraft fuel control valve state in an aircraft fuel control valve assembly, the method comprising positioning the aircraft fuel control valve assembly in an aircraft fuel line, said aircraft fuel control valve assembly comprising: a fuel control valve housing, said fuel control valve housing comprising: a valve body, a valve inlet, a valve outlet, a valve chamber established by an area within the fuel control valve housing, said valve chamber further established between the valve inlet and the valve outlet, and a movable valve, said movable valve positioned substantially within the valve chamber, a primary electromagnetic energy transmitter integrated into the aircraft fuel control valve assembly, said primary electromagnetic energy transmitter configured to direct a primary electromagnetic energy beam from the primary electromagnetic energy transmitter into and across the valve chamber, said primary electromagnetic energy transmitter further comprising an electromagnetic energy source; and a primary electromagnetic energy receiver integrated into the aircraft fuel control valve assembly, said primary electromagnetic energy receiver configured to receive the primary electromagnetic energy beam from the primary electromagnetic energy transmitter, said primary electromagnetic energy receiver configured to generate a valve condition primary signal, the method further comprising generating an electromagnetic energy beam at the primary electromagnetic energy transmitter; transmitting from the primary electromagnetic energy transmitter and into the valve chamber the primary electromagnetic energy beam to form a transmitted primary electromagnetic energy beam; receiving at the primary electromagnetic energy receiver the primary electromagnetic energy beam transmitted from the primary electromagnetic energy transmitter; and directly monitoring the aircraft fuel control valve state based on at least one of receipt and non-receipt of the transmitted primary electromagnetic energy beam by the primary electromagnetic energy receiver.

Upon the primary electromagnetic energy receiver receiving the transmitted primary electromagnetic energy beam, the method may further comprise: generating a fuel control valve condition primary signal at the primary electromagnetic energy receiver; and interpreting the fuel control valve condition primary signal to form an interpreted fuel valve condition primary signal, said interpreted fuel valve condition primary signal corresponding to the aircraft fuel control valve state, said aircraft fuel control valve state comprising at least one of an aircraft fuel control valve open configuration and an aircraft fuel control valve closed configuration.

The method may further comprise directing the interpreted fuel valve condition primary signal to a readout.

Receipt of the transmitted primary electromagnetic energy beam by the primary electromagnetic energy receiver may evidence the aircraft fuel control valve open configuration.

## Claims

1. An aircraft fuel control valve assembly (24) comprising:
a fuel control valve housing (25), said fuel control valve housing comprising;
a valve body (26);
a valve inlet (28);
a valve outlet (30);
a valve chamber (32), said valve chamber established by an area within the aircraft fuel control valve assembly, said valve chamber further established between the valve inlet and the valve outlet;
a movable valve (34), said movable valve positioned substantially within valve chamber (32);
a primary electromagnetic energy transmitter (42) integrated into the aircraft fuel control valve assembly, said primary electromagnetic energy transmitter configured to direct a primary electromagnetic energy beam (42a) from the primary electromagnetic energy transmitter into and across the valve chamber, said primary electromagnetic energy transmitter further comprising an electromagnetic energy source; and
a primary electromagnetic energy receiver (44) integrated into the aircraft fuel control valve assembly, said primary electromagnetic energy receiver configured to receive the primary electromagnetic energy beam from the primary electromagnetic energy transmitter, said primary electromagnetic energy receiver configured to generate a valve condition primary signal (44a).

2. The aircraft fuel control valve assembly of claim 1, said movable valve configured to comprise an operable range of motion between an open valve configuration and a closed valve configuration.

3. The aircraft fuel control valve assembly of claim 2, further comprising an actuator (36), said actuator in communication with the movable valve, said actuator configured to move the movable valve between the open valve configuration and the closed valve configuration.

4. The aircraft fuel control valve assembly (124) of any preceding claim, further comprising:
a secondary electromagnetic energy transmitter (152) integrated into the aircraft fuel control valve assembly (124), said secondary electromagnetic energy transmitter configured to direct a secondary electromagnetic energy beam (152a) from the secondary electromagnetic energy transmitter into the valve chamber (132), said secondary electromagnetic energy transmitter further comprising an electromagnetic energy source; and
a secondary electromagnetic energy receiver (154) integrated into the fuel aircraft fuel control valve assembly, said secondary electromagnetic energy receiver configured to receive at least one of the primary electromagnetic energy beam from the primary electromagnetic energy transmitter and the secondary electromagnetic beam from the secondary electromagnetic energy transmitter, said secondary electromagnetic energy receiver configured to generate a valve condition secondary signal (154a).

5. The aircraft fuel control valve assembly of any preceding claim, wherein the electromagnetic energy source is at least one of a laser and a light emitting diode, said electromagnetic energy source configured to generate a light beam to form a generated light beam, said generated light beam comprising a wavelength ranging from about 850 nm to about 1550 nm.

6. The aircraft fuel control valve assembly of any of claims 1 to 4, wherein the primary electromagnetic energy transmitter is in communication with a primary electromagnetic energy source (41), said primary electromagnetic energy source comprising at least one of a laser and a light emitting diode, said primary electromagnetic energy source configured to generate a light beam to form a generated light beam, said generated light beam having a wavelength ranging from about 850 nm to about 1550 nm.

7. The aircraft fuel control valve assembly of claim 5 or 6, wherein said generated light beam extends from the primary electromagnetic energy transmitter to the primary electromagnetic energy receiver along a substantially straight line, said substantially straight line extending through the valve chamber from the primary electromagnetic energy transmitter to the primary electromagnetic energy receiver when the movable valve is in the open valve configuration.

8. The aircraft fuel control valve assembly of claim 5 or 6, wherein the generated light beam is configured to extend diagonally through the valve chamber from the primary electromagnetic energy transmitter to the primary electromagnetic energy receiver when the movable valve is in the open valve configuration.

9. An aircraft (10) comprising the aircraft fuel control valve assembly of any preceding claim.

10. An aircraft fuel line control valve assembly state detection system (40) for determining an aircraft fuel control valve assembly state, said aircraft fuel line control valve assembly state detection system comprising:
an aircraft fuel control valve assembly (24) of any of claims 1 to 9, said aircraft fuel control valve assembly positioned within an aircraft fuel line (22); and
a processor (46) in communication with the primary electromagnetic energy receiver, said processor configured to receive the valve condition primary signal, said processor further configured to interpret the valve condition primary signal generated by the primary electromagnetic energy receiver to form an interpreted movable valve condition primary signal, said interpreted movable valve condition primary signal corresponding to the aircraft fuel valve state.

11. The aircraft fuel line control valve assembly state detection system of claim 10, further comprising: a readout in communication with the processor.

12. The aircraft fuel line control valve assembly state detection system of claim 10 or 11, further comprising a valve actuator, said valve actuator in direct communication with the movable valve, said actuator configured to move the movable valve between an open valve configuration and a closed valve configuration.

13. The aircraft fuel line control valve assembly state detection system of any of claims 10 to 12, further comprising:
a secondary electromagnetic energy transmitter (152) integrated into the aircraft fuel control valve assembly (124), said secondary electromagnetic energy transmitter configured to direct a secondary electromagnetic energy beam (152a) from the secondary electromagnetic energy transmitter into and across the fuel valve chamber (132), said secondary electromagnetic energy transmitter further comprising a secondary electromagnetic energy source; and
a secondary electromagnetic energy receiver (154) integrated into the aircraft fuel control valve assembly, said secondary electromagnetic energy receiver configured to receive at least one of the primary electromagnetic energy beam from the primary electromagnetic energy transmitter and the secondary electromagnetic beam from the secondary electromagnetic energy transmitter, said secondary electromagnetic energy receiver configured to generate a valve condition secondary signal (154a).

14. A method (200) for directly monitoring an aircraft fuel control valve assembly state in an aircraft fuel control valve assembly, the method comprising:
positioning (202) the aircraft fuel control valve assembly in an aircraft fuel line, said aircraft fuel control valve assembly comprising:
a fuel control valve housing (25), said fuel valve control housing comprising;
a valve body (26);
a valve inlet (28);
a valve outlet (30);
a valve chamber (32) established by an area within the fuel valve housing, said valve chamber further established between the valve inlet and the valve outlet;
a movable valve (34), said movable valve positioned substantially within valve chamber (32);
a primary electromagnetic energy transmitter (42) integrated into the aircraft fuel control valve assembly, said primary electromagnetic energy transmitter configured to direct a primary electromagnetic energy beam (42a) from the primary electromagnetic energy transmitter into and across the valve chamber, said primary electromagnetic energy transmitter further comprising an electromagnetic energy source; and
a primary electromagnetic energy receiver (44) integrated into the aircraft fuel control valve assembly, said primary electromagnetic energy receiver configured to receive the primary electromagnetic energy beam from the primary electromagnetic energy transmitter, said primary electromagnetic energy receiver configured to generate a valve condition primary signal (44a);
generating (204) an electromagnetic energy beam at the primary electromagnetic energy transmitter;
transmitting (206) from the primary electromagnetic energy transmitter and into the valve chamber the primary electromagnetic energy beam to form a transmitted primary electromagnetic energy beam; and
receiving (208) at the primary electromagnetic energy receiver the primary electromagnetic energy beam transmitted from the primary electromagnetic energy transmitter; and
directly monitoring (210) the aircraft fuel valve state based on at least one of receipt and non-receipt of the transmitted primary electromagnetic energy beam by the primary electromagnetic energy receiver.

15. The method (300) of claim 14, upon the primary electromagnetic energy receiver receiving the transmitted primary electromagnetic energy beam, the method further comprising:
generating (302) a fuel control valve condition primary signal at the primary electromagnetic energy receiver; and
interpreting (304) the fuel control valve condition primary signal to form an interpreted fuel control valve condition primary signal, said interpreted fuel control valve condition primary signal corresponding to the aircraft fuel control valve state, said aircraft fuel control valve assembly state comprising at least one of an aircraft fuel control valve open configuration and an aircraft fuel control valve closed configuration.
